# FASCICULE DE BREVET EUROPEEN

(11) **EP 1 410 948 B1**
(45) Date de publication et mention de la délivrance du brevet: **02.11.2006**
(21) Numéro de dépôt: 03292557.0
(22) Date de dépôt: 14.10.2003
(51) Int. Cl.: B60Q 1/04

(54) **Joint d'étanchéité pour bloc optique automobile**
Dichtung für Beleuchtungseinheit
Seal for vehicle lighting unit

(30) Priorité: 18.10.2002 FR 0213335
(43) Date de publication de la demande: 21.04.2004
(73) Titulaire: VALEO VISION, 93012 Bobigny Cédex (FR)
(72) Inventeur: Fleurence, Thierry, c/o Valeo Vision, 93012 Bobigny Cedex (FR)

(56) Documents cités:
- EP-A- 0 258 877
- EP-A- 1 095 764
- WO-A-99/66234
- DE-A- 1 655 486
- FR-A- 2 114 576
- FR-A- 2 260 748
- FR-A- 2 411 692
- US-A- 5 282 101

## Description

La présente invention se rapporte à un joint d'étanchéité pour bloc optique constituant un feu de signalisation ou d'éclairage automobile.

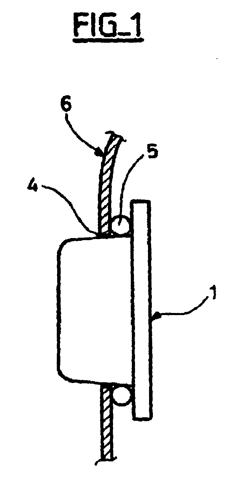

Un tel bloc optique 1 est représenté sur la figure 1 installé sur un véhicule. Il est monté sur la carrosserie du véhicule 6 par insertion dans une ouverture 4 agencée dans celle-ci, afin que le feu de signalisation ou d'éclairage soit dirigé vers l'extérieur du véhicule. Un joint d'étanchéité 5 est intercalé entre le bloc 1 et la carrosserie 6. Le bloc optique 1 est vissé ou clippé sur la carrosserie 6.

Actuellement, ce joint peut être réalisé des façons suivantes.

Il peut être constitué d'un cordon cylindrique en mousse éventuellement préencollé et fixé tout autour du bloc optique. Ce mode de réalisation est de montage long et manque de fiabilité.

Il peut être constitué d'une plaque de mousse découpée d'une dimension supérieure à celle de l'ouverture de la carrosserie et découpée d'un orifice interne pour former un cadre.

La mousse dans ce cas utilisée est alvéolaire et présente des problèmes d'étanchéité, l'eau pouvant s'introduire et stagner dans ces alvéoles.

Par ailleurs, ce type de joint pose également des problèmes d'étanchéité à cause du manque de souplesse de la mousse difficile à comprimer suffisamment lors du vissage ou clippage du bloc optique.

On connaît par exemple des documents DE16 55 486 et FR-A-2 411 692 des joints d'étanchéité pour feux de signalisation de véhicules automobiles, et du document FR-A-2 114 576 un procédé et une machine pour la fabrication de joints.

L'invention résout ces problèmes en proposant un joint d'étanchéité pour bloc optique constituant un feu de signalisation ou d'éclairage automobile, de fabrication rapide et fiable et de qualité d'étanchéité excellente.

Pour ce faire l'invention concerne un joint d'étanchéité pour bloc optique constituant un feu de signalisation ou d'éclairage automobile, selon la revendication 1.

L'invention présente plusieurs avantages.

Le procédé de fabrication par extrusion est un procédé rapide et fiable.

Il permet également la réalisation à partir de matière alvéolaire d'une peau de surface qui assure une excellente étanchéité, cette peau formant barrage contre l'humidité. De plus, par extrusion, il est possible d'obtenir un joint particulièrement souple et compressible.

La lèvre très aisément réalisée lors de l'extrusion améliore encore l'étanchéité.

En effet, le joint doit s'adapter le plus intimement possible à l'espace entre le bloc optique et la carrosserie. Or ceci peut s'avérer difficile pour plusieurs raisons. Tout d'abord, la carrosserie peut avoir une forme non plane ou galbée à cet endroit. Ensuite, il faut tenir compte de différences de géométrie du bloc optique et de la carrosserie à cet endroit. Enfin, des intervalles de tolérances sont à considérer, surtout lorsque le bloc optique est clippé sur la carrosserie, ce clippage assurant un serrage moindre qu'un vissage et devant être compensé pour obtenir une compression correcte du joint afin d'obtenir une étanchéité acceptable.

La lèvre résout ces différents problèmes en fournissant une surépaisseur à l'endroit de la compression du joint contre la carrosserie qui s'adapte à la forme de la carrosserie et du bloc optique, compense les différences de tolérance et assure une compression maximale.

Avantageusement, le joint conforme à l'invention est constitué de différentes matières coextrudées et de dureté différente.

L'extrusion permet la réalisation d'un tel joint en différentes matières de dureté différente par coextrusion dans le sens d'avancement de l'extrusion. Ainsi il peut être réalisé une partie plus souple à l'endroit de la lèvre, par exemple.

De préférence, il est constitué au moins partiellement d'EPDM alvéolaire.

L'invention concerne également un procédé de fabrication d'un joint, caractérisé en ce qu'il consiste à réaliser par extrusion une bande, à la découper en plaques de dimension égale à celle du joint et à découper ledit orifice interne.

Par ce procédé, est obtenu un joint de meilleure tenue, de montage simplifié en conséquence et facilitant la mise en place éventuelle d'un adhésif de liaison sur le bloc optique.

De préférence, la découpe en plaques et la découpe dudit orifice sont simultanées.

L'invention est décrite ci-après plus en détail à l'aide de figure ne représentant qu'un mode de réalisation préféré de l'invention.

La figure 1 dont il a déjà été question représente un bloc optique monté sur une carrosserie de véhicule.

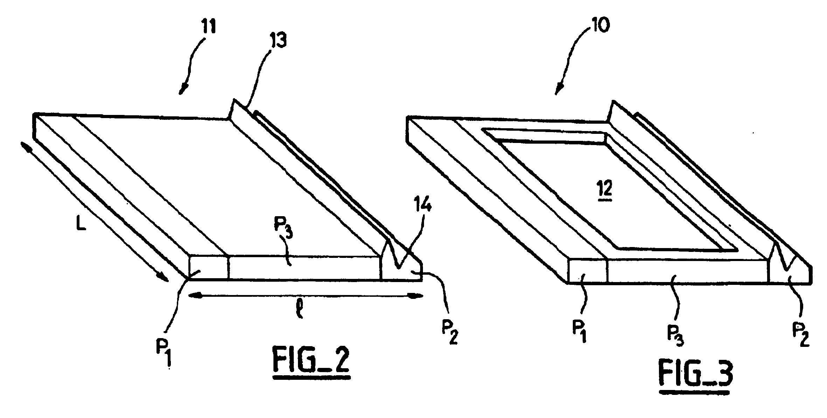

La figure 2 est une vue en perspective d'un joint conforme à l'invention dans une étape intermédiaire de sa fabrication.

La figure 3 est une vue en perspective d'un joint conforme à l'invention.

Par extrusion est réalisée une bande en matière à peau de surface auto formée par extrusion, de préférence en EPDM alvéolaire, et cette bande est découpée en plaques 11 de dimension égale à celle du joint. Selon le mode de réalisation décrit, la largeur l d'extrusion de la bande correspond à la largeur du joint et la longueur L des plaques 11 découpées à la longueur du joint, c'est-à-dire la dimension qui sera sensiblement horizontale une fois le joint monté sur la carrosserie.

Pour obtenir le joint 10 conforme à l'invention, est ensuite découpée un orifice interne 12 destiné à recevoir le bloc optique.

Afin d'optimiser ce procédé, de préférence, la découpe en plaques 11 et la découpe de l'orifice 12 peuvent être simultanées.

Avantageusement, lors de l'extrusion, est réalisée sur au moins un des bords de la bande, une lèvre 13 de hauteur supérieure à l'épaisseur de la bande et perpendiculaire à celle-ci.

Selon le mode de réalisation représenté, cette lèvre 13 est réalisée sur le côté supérieur du joint, une fois le bloc optique monté sur la carrosserie.

Plusieurs lèvres 13, 14 parallèles et de hauteur différente peuvent être réalisées, dans l'exemple représenté, elles sont au nombre de deux.

Un tel agencement asymétrique entraîne lors du montage du bloc optique sur la carrosserie une compression et une contre réaction plus importante sur le bord équipé des lèvres 13, 14. Ainsi est réalisé un basculement du bloc optique lors du montage permettant un rattrapage de jeu au niveau du bord opposé.

Avantageusement, le joint 10 est constitué de différentes matières coextrudées et de dureté différente.

Selon le mode de réalisation représenté, il est constitué de deux matières. L'une plus souple constitue les parties de bord P1, P2 dans le sens de l'extrusion, une partie P2 comportant les lèvres 13, 14 et l'autre plus dure la partie centrale P3 du joint 10.

## Revendications

1. Joint d'étanchéité pour bloc optique constituant un feu de signalisation ou d'éclairage automobile, destiné à être monté entre ce bloc optique (1) et un support (6) dans lequel il est inséré, joint constitué d'une plaque de matière souple pourvue d'un orifice interne (12) destinée à recevoir le bloc, le joint comportant sur au moins un de ses bords au moins une lèvre (13, 14) de hauteur supérieure à l'épaisseur de la plaque et perpendiculaire à celle-ci, fournissant une surépaisseur à l'endroit de la compression du joint contre le support (6) **caractérisé en ce qu'**il est constitué d'au moins une matière à peau de surface auto formée par extrusion, et **en ce qu'**au moins l'un des bords de la plaque ne comporte pas de lèvre (13, 14).

2. Joint selon la revendication précédente, **caractérisé en ce qu'**il est constitué de différentes matières coextrudées et de dureté différente.

3. Joint selon l'une des revendications précédentes, **caractérisé en ce qu'**il est constitué au moins partiellement d'EPDM alvéolaire.

4. Procédé de fabrication d'un joint selon l'une des revendications précédentes, **caractérisé en ce qu'**il consiste à réaliser par extrusion une bande, à la découper en plaques (11) de dimension égale à celle du joint et à découper ledit orifice interne (12).

5. Procédé selon la revendication 4, **caractérisé en ce que** la découpe en plaques (11) et la découpe dudit orifice (12) sont simultanées.

## Claims

1. Seal for an optical unit constituting a motor vehicle signalling or lighting device, intended to be mounted between this optical unit (1) and a support (6) in which it is inserted, a seal consisting of a sheet of flexible material provided with an internal orifice (12) intended to receive the unit, the seal comprising, on at least one of its edges, at least one lip (13, 14) with a height greater that the thickness of the plate and perpendicular thereto, providing a protrusion at the point where the seal is compressed against the support (6), **characterised in that** it consists of at least one material with a surface skin autoformed by extrusion, and **in that** at least one of the edges of the plate does not have a lip (13, 14).

2. Seal according to the preceding claim, **characterised in that** it consists of various coextruded materials with different hardnesses.

3. Seal according to one of the preceding claims, **characterised in that** it consists at least partially of alveolar EPDM.

4. Method of manufacturing a seal according to one of the preceding claims, **characterised in that** it consists of producing a strip by extrusion, cutting it into sheets (11) of a size equal to that of the seal and cutting the said internal orifice (12).

5. Method according to claim 4, **characterised in that** the cutting into sheets (11) and the cutting of the said orifice (12) are simultaneous.

## Patentansprüche

1. Dichtung für eine Beleuchtungseinheit, die eine Signalleuchte oder einen Scheinwerfer für Kraftfahrzeuge bildet und die dazu bestimmt ist, zwischen der Beleuchtungseinheit (1) und einer Halterung (6) angebracht zu werden, in die sie eingefügt ist, wobei die Dichtung aus einer Platte aus nachgiebigem Material gebildet ist, die mit einer inneren Öffnung (12) versehen ist, die zum Aufnehmen der Einheit bestimmt ist, wobei die Dichtung auf wenigstens einem ihrer Ränder wenigstens eine Lippe (13, 14) aufweist, die höher ist als die Dicke der Platte und zu dieser senkrecht verläuft und an der Stelle, an der die Dichtung gegen die Halterung (6) gedrückt wird, eine Verdickung bildet,
**dadurch gekennzeichnet, dass** sie aus wenigstens einem Material mit sich durch Extrusion selbstbildender Oberflächenhaut gebildet ist, und dass wenigstens einer der Ränder der Platte keine Lippe (13, 14) aufweist.

2. Dichtung nach dem vorhergehenden Anspruch,
**dadurch gekennzeichnet, dass** sie aus verschiedenen coextrudierten Materialien mit unterschiedlicher Härte gebildet ist.

3. Dichtung nach einem der vorhergehenden Ansprüche,
**dadurch gekennzeichnet, dass** sie wenigstens teilweise aus wabenförmigem EPDM gebildet ist.

4. Verfahren zur Herstellung einer Dichtung nach einem der vorhergehenden Ansprüche,
**dadurch gekennzeichnet, dass** es darin besteht, durch Extrusion einen Streifen herzustellen, diesen in Platten (11) zu schneiden, die die gleiche Größe haben wie die Dichtung, und die innere Öffnung (12) auszuschneiden.

5. Verfahren nach Anspruch 4,
**dadurch gekennzeichnet, dass** der Zuschnitt der Platten (11) und der Ausschnitt der Öffnung (12) gleichzeitig erfolgen.
